# EUROPEAN PATENT APPLICATION

(11) **EP 0 911 544 A1**
(43) Date of publication of application: **28.04.1999**
(21) Application number: 98119739.5
(22) Date of filing: 21.10.1998
(51) Int. Cl.: F16H 35/02

(54) **Cam box for transmitting motion among parallel rotating shafts**

(30) Priority: 22.10.1997 IT BO970634
(71) Applicant: Italcamme S.r.l., 40061 Minerbio, (Prov. of Bologna) (IT)
(72) Inventor: Maccaferri, Valerio, 40054 Budrio, (Province of Bologna) (IT)
(74) Representative: Modiano, Guido, Dr.-Ing.

(57) **Abstract**

A box with cams (6b, 5b, 6a, 5a) for transmitting motion among parallel rotating shafts (4, 2, 3), wherein at least two driven output shafts (2, 3) are kinematically connected to a common driving input shaft (4) by means of respective mutually meshing cams (5a, 6a, 5b, 6b); the box comprises means (7, 8) for adjusting the center distance (2s, 3s, 4s) between the output shafts (2, 3) and the input shaft (4) and the output shafts (2, 3) are assembled so as to be mutually coaxial.

## Description

The present invention relates to a cam box for transmitting motion among parallel rotating shafts.

In mechanical motion transmissions, cam boxes are used to convert the motion received from a driving input shaft and transmit it, in modified form, according to appropriate criteria which are correlated to the geometry of the cams, to one or more driven output shafts which are connected to actuators which perform particular movements in the industrial field.

Depending on the various applications for which the cam box is designed, it is in fact possible to obtain on the output shaft, with equal kinematic characteristics of the motion of the input shaft, a wide variety of movements, such as rotary motions at increased or reduced speeds with respect to the input speed, variable-speed rotary motions, discontinuous motions with advancements and stops having particular values, reciprocating motions, oscillating motions, etcetera.

The actuators have rather differentiated shapes and can be constituted for example by mechanical arms, by levers or by entire mechanisms which are actuated so as to automatically perform the most disparate tasks, such as for example some handling operations for wrapping and packaging products in containment boxes.

Among known embodiments of cam boxes, constructive solutions which have a twin output shaft are known in which two mutually parallel output shafts are driven by a common input shaft. These cam boxes are further provided with adjustment means which are structured and operate so as to allow to vary the center distance between the driven shafts while keeping them constantly connected to the input shaft, according to the requirements of the actuators to which the cam box is specifically assigned.

The adjustment means are constituted by shaft bearing supports provided with a certain number of eccentric holes distributed around the shaft axis. The holes have variable distances with respect to the axis and are shaped so as to accommodate pins which stably but detachably connect the supports to the structure of the cam box.

The constructive solution with mutually parallel driven shafts generally entails a certain difficulty in obtaining the exact synchronization of the motion of the two shafts that is necessary in order to have optimum operating coordination among the actuators moved by the two driven shafts.

Due to the distance between the driven shafts, and/or if the driven shafts actuate rather long levers, the precise adjustment of synchronization is difficult to perform and requires rather long adjustment times.

However, while a somewhat imprecise coordination can be sometimes accepted for low-speed applications, in the case of fast automations inaccurate synchronization is entirely unacceptable.

Cam boxes provided with two or more parallel output shafts further entail another drawback residing in the fact that they do not allow identical conditions for the meshing between the cams of the two output shafts and the cams of the common input shaft.

The presence of two motion take-off lines which are mutually angularly offset around the axis of the driving shaft and with spaced driven shafts, and the inevitable differences that can be observed in the actual assembly conditions of the various shafts, in fact do not allow all the cams to operate in exactly the same meshing conditions.

It is in fact known that large assembly plays can produce unsatisfactory meshing conditions, with synchronization losses due to the possibility of mutual slippage in a tangent direction between the mating cams which are in direct mutual contact. Excessively small plays instead entail more effective motion transmission, but also disadvantageously entail excessive wear of the mutually coupled moving parts.

Accordingly, the presence of two angularly offset motion take-off lines and the discontinuous and discrete adjustment which is typical of the above-described pin-and-hole system entail an adjustment of the entire cam box which is approximate and difficult and in any case uneven.

The aim of the present invention is therefore to eliminate the above-mentioned drawbacks by means of a cam box which is structured and operates so as to allow easy, quick and effective synchronization of the driven shafts, at the same time ensuring preloading operations which are suitable to even out the thrust loads so as to achieve an optimum compromise between the requirements of correct meshing and the requirements of uniform wear of all the cams, finally ensuring substantially uniform preloading conditions, on both motion transmission lines.

According to the invention, this aim is achieved by a cam box for transmitting motion among parallel rotating shafts in which at least two driven output shafts are kinematically connected to a common driving input shaft by means of respective mutually meshing cams, said box comprising means for adjusting the center distance between the output shafts and the input shaft, characterized in that the output shafts are assembled so as to be mutually coaxial.

The technical characteristics of the invention, according to the above aim, can be easily deduced from the content of the appended claims and the advantages of said invention will become apparent in the following detailed description, given with reference to the accompanying drawings, which illustrate a purely exemplifying and non-limitative embodiment thereof, wherein:

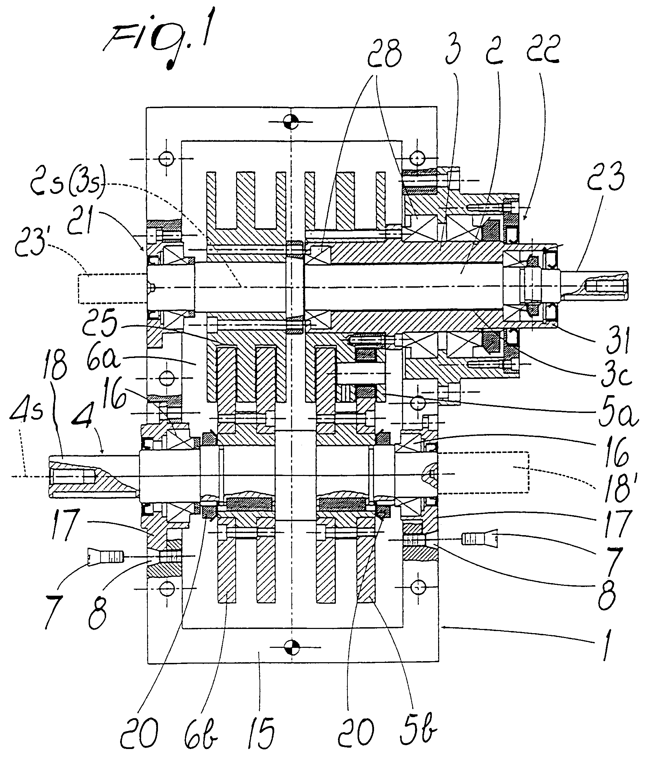

Figure 1 is a general transverse sectional view of a cam box according to the invention.

According to the figure shown in the accompanying drawing, the reference numeral 1 generally designates a box for transmitting rotary motion, which is substantially provided with a casing 15 which supports three rotating shafts 2, 3 and 4 which are kinematically connected and have respective parallel axes 2s, 3s and 4s.

A first shaft 4 is supported by the casing 15 by means of rolling bearings 16 which are accommodated inside supports 17 mounted on mutually opposite walls of the casing 15. The first shaft 4 is provided with an end pin 18 which cantilevers toward the outside of the box 1 and supports, between the supports 17, two cam sets 5b and 6b.

The cams 5b and 6b are entirely conventional and are keyed to the shaft 4 so that they rotate rigidly therewith and are locked in an axial direction against an interposed raised portion 19 of the shaft 4 by respective locking rings 20.

A second shaft 2 is supported by the casing 15 in exactly the same manner as the first shaft 4. More particularly, it is supported by rotatable supports 21 and 22 which are fitted in mutually opposite walls of the casing 15, it is provided with an end pin 23 which protrudes from the casing 15 and cantilevers toward the outside from an opposite side with respect to the one related to the end pin 18 of the first shaft 4, and supports a cam set 6a of its own.

The cams 6a of the second shaft 4 are shaped and arranged so as to have profiles 25 which are shaped so as to mate in mutual rolling contact and by meshing with corresponding cams 6b of the set of cams 6b and 5b supported by the first shaft 4. The profiles 25 are shaped according to preset motion transmission criteria which are suitable to correlate the rotations of the first shaft 4 and of the second shaft 2 on the corresponding supports 20, 21, 22 in manners which are dictated by the requirements of actuators (not shown) to which the box 1 is functionally assigned.

The third shaft 3 has a tubular shape, is crossed from one end to the other by an internal cavity 3c and is mounted coaxially to the second shaft 2 which, by being accommodated in the cavity 3c and supported by a bearing 28 located inside said cavity, passes through all of the third shaft 3 until it protrudes toward the outside of the casing 15 with its end pin 23.

Also the third shaft 3 has an end pin 31 which cantilevers out from the support 22 and protrudes toward the outside of the box 1: it is also provided with its own set of cams 5a which mesh with corresponding complementary cams 5b of the first shaft 4.

The box 1 is further provided with means for adjusting the distance between the axis 4s of the first shaft 4 and the axes 2s, 3s of the second and third shafts 2 and 3. Said adjustment means are provided in particular by conical screws 7 which are accommodated in corresponding complementarily shaped cavities 8 formed between the supports 17 of the first shaft 4 and the walls of the casing 15 and are significantly orientated parallel to the axis 4s of said first shaft 4. The screws 7, by advancing in the cavity 8, abut laterally against the supports 17, causing the movement of the first shaft 4 parallel to itself toward or away from the axes 2s and 3s, depending on the direction of the rotation imparted to said screws 7.

The screws 7 and the cavities 8 that accommodate them therefore allow to provide more general means for the continuous and gradual adjustment of the center distance of the shafts 4, 2 and 3 which can be advantageously used to apply to the cams 6b, 6a and 5b, 5a thrusting loads whose intensity is adequate and uniform for all the cams 6b, 6a, 5b, 5a of the box 1.

Moreover, since the screws 7 do not require extraction from the corresponding cavities 8 that accommodate them to pass from one adjustment position to the other, the embodiment of the above-described adjustment means is advantageous not only because of the speed and the possibility of modulating the thrusting load but also because it does not require to disassemble parts or to provide free space around the box 1 to allow the evolution of said parts during adjustment operations.

During use, if the first shaft 4 is set as a driving shaft by coupling a motor drive to the end pin 23, the rotary motion received by the box 1 in input and through the first shaft 4 is transmitted simultaneously to the second shaft 2 and to the third shaft 3, which are rotated by means of the respective cams 6b, 6a and 5b, 5a which mutually mesh.

At the output of the box 1, and at the end pins 23 and 22, rotary motions are therefore made available on a same axis 2s, 3s which, if performed according to the rules of motion implemented by the geometry of the cams 6b, 6a, 5b, 5a, can be used to appropriately actuate actuators which are not shown.

The invention thus conceived is susceptible of numerous modifications and variations, all of which are within the scope of the inventive concept; for example, said rotating shafts 2 and 4 (i.e., the driven shaft and the motorized shaft in the illustrated case) can, if necessary, protrude from said box 1 also on the opposite side with respect to the one shown in Figure 1, thus constituting a motion take-off or transit point of the two-sided type: this is allowed by applying corresponding additional cantilevered end pins 23' and 18' (shown in broken lines in Figure 1) which are similar to those described above. All the details may also be replaced with technically equivalent elements.

The disclosures in Italian Patent Application No. BO97A000634 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A box (1) with cams (6b, 6a, 5b, 5a) for transmitting motion among parallel rotating shafts (4, 2, 3), wherein at least two driven output shafts (2, 3) are kinematically connected to a common driving input shaft (4) by means of respective mutually meshing cams (5a, 6a, 5b, 6b), said box (1) comprising means (7, 8) for adjusting the center distance (2s, 3s, 4s) between the output shafts (2, 3) and the input shaft (4), characterized in that the output shafts (2, 3) are assembled so as to be mutually coaxial.

2. The box according to claim 1, characterized in that at least one of the output shafts (3) has a tubular shape and is provided with an internal cavity (3c) in which another one of the remaining output shafts (2) of the box (1) is accommodated.

3. The box according to claim 1, characterized in that the means (7, 8) for adjusting the center distance (2s, 3s, 4s) are structured so as to apply to said shafts (2, 3, 4) continuous and progressive center distance variations.

4. The box according to claim 3, characterized in that the adjustment means comprise at least one conical screw (7) which is accommodated in a corresponding cavity (8) which is complementarily shaped and is orientated parallel to the axes (2s, 3s, 4s) of the rotating shafts, the advancement of the screw (7) in the cavity (8) determining a variation in the distance between the input shaft (4) and the output shafts (2, 3).

5. The box according to claim 4, characterized in that it comprises two of said conical screws (7) which are associated with corresponding cavities (8) formed in the box (1) at end supports (17) of the input shaft (4).

6. The box according to claim 1, wherein said rotating output shafts (2, 3) and said input shaft (4) have, at their end, at least one corresponding pin (23, 18) which is external to said box (1) and forms a point for the transit and, respectively, take-off of the motion, characterized in that said output and input shafts (2, 3, 4) have, at their other respective end, an additional pin (23', 18') which is external to said box (1) and is suitable to form a second point for the transit and, respectively, take-off of the motion so as to provide a take-off configuration of the double-front type.
